# FASCICULE DE BREVET EUROPEEN

(11) **EP 0 858 079 B1**
(45) Date de publication et mention de la délivrance du brevet: **05.09.2001**
(21) Numéro de dépôt: 98400264.2
(22) Date de dépôt: 06.02.1998
(51) Int. Cl.: G21C 19/07, G21C 19/40

(54) **Râtelier de stockage d'assemblages de combustible nucléaire à ensembles neutrophages maintenus par des cadres**
Lagergestell für Kernreaktorbrennstabbündel mit durch Rahmen festgehaltenen Neutronenabsorberelementen
Storage rack for nuclear fuel assemblies with neutron absorbing members being held in position by frames

(30) Priorité: 10.02.1997 FR 9701487
(43) Date de publication de la demande: 12.08.1998
(73) Titulaire: Société Atlantique de Techniques Avancées, 44000 Nantes (FR)
(72) Inventeur: Robert, Jean, 44240 La Chapelle Sur Erdre (FR); Kopecky, Bernard, 44300 Nantes (FR)
(74) Mandataire: Poulin, Gérard

(56) Documents cités:
- EP-A- 0 175 140
- DE-A- 2 730 850
- DE-U- 9 000 780
- FR-A- 2 523 359
- FR-A- 2 680 909
- US-E- R E31 661

## Description

### Domaine technique

L'invention concerne un râtelier de stockage conçu pour recevoir des assemblages de combustible nucléaire neufs ou précédemment irradiés dans un réacteur nucléaire.

Dans l'ensemble du texte, l'expression "râtelier de stockage" désigne une structure de formes et de dimensions quelconques, fixe ou mobile, apte à recevoir un nombre variable d'assemblages de combustible nucléaire neufs ou irradiés.

### Etat de la technique

Dans l'industrie nucléaire, les assemblages de combustible, qui constituent la source d'énergie des centrales nucléaires, doivent fréquemment être stockés. Un tel stockage peut intervenir aussi bien lorsque l'assemblage est neuf que lorsqu'il a été irradié dans le coeur du réacteur. Dans le premier cas, des stockages peuvent être nécessaires sur le site de fabrication comme dans la centrale nucléaire. Après irradiation, les assemblages peuvent être stockés dans la centrale, puis en un lieu éloigné de celle-ci tel qu'un site de retraitement.

Lorsque les assemblages de combustible nucléaire doivent être stockés, ils sont habituellement placés dans des râteliers de stockage immergés dans des piscines. Plus précisément, un râtelier de stockage peut généralement recevoir plusieurs dizaines d'assemblages de combustible nucléaire, chacun des assemblages étant reçu dans une cavité ou "alvéole" verticale séparée, de section sensiblement carrée. Il va de soi que plusieurs râteliers peuvent être placés dans une même piscine et que le nombre des cavités est variable suivant les râteliers, de même que la forme extérieure de ces derniers.

Les râteliers de stockage des assemblages de combustible nucléaire ont principalement pour fonction de permettre le stockage d'un nombre d'assemblages aussi élevé que possible dans un volume donné. Cela conduit à réduire le plus possible les distances entre les cavités adjacentes.

Afin que la distance réduite qui sépare les assemblages de combustible nucléaire voisins soit compatible avec les impératifs de criticité, les râteliers de stockage comprennent habituellement, entre les cavités adjacentes , des parois en un matériau ayant un pouvoir d'absorption vis-à-vis des neutrons, appelé "matériau neutrophage". Ce matériau peut notamment être de l'acier inoxydable boré, la proportion de bore étant généralement comprise entre 0 et 2 %.

Par ailleurs, les râteliers de stockage doivent préserver leur intégrité pendant une durée de vie d'environ quarante ans, comparable à celle des installations nucléaires. Ils doivent donc présenter une bonne résistance à la corrosion en eau pure ou additionnée d'acide borique, une bonne stabilité dimensionnelle et structurelle sous rayonnements, ainsi qu'une bonne tenue aux séismes.

Cependant, si les matériaux neutrophages présentent normalement une très bonne tenue à la corrosion et une très grande stabilité sous rayonnements, ils supportent très mal les opérations d'assemblage par pliage, soudage, rivetage, etc.. En effet, ces opérations d'assemblage ont notamment pour conséquences la formation de fissures et de contraintes résiduelles, ainsi que des migrations de borures aux joints de grains, préjudiciables à la tenue mécanique et à la résistance à la corrosion.

A ces problèmes s'ajoutent des difficultés de fabrication des râteliers, dues à leur très grande compacité. En particulier, l'assemblage des différentes pièces constituant un râtelier de stockage est particulièrement difficile à effectuer. En effet, il n'est pratiquement pas possible d'effectuer des opérations d'assemblage du type soudage ou rivetage à l'intérieur de cavités déjà constituées, sans mettre en oeuvre des outillages et des procédures particulièrement complexes et coûteuses.

Dans le document FR-A-2 680 909, on a proposé de réaliser un râtelier de stockage d'assemblages de combustible nucléaire, en reliant en quinconce des tubes de section sensiblement carrée. A cet effet, on soude des pattes de liaison sur les faces extérieures de ces tubes. Au fur et à mesure que les tubes sont reliés entre eux par soudage des pattes de liaison, on place des plaques planes en un matériau neutrophage dans les espaces libres séparant les tubes. Ces plaques présentent des bords crénelés complémentaires qui sont emboîtés les uns dans les autres au fur et à mesure du montage.

Le râtelier de stockage décrit dans le document FR-A-2 680 909 permet de résoudre les problèmes énoncés précédemment. En particulier, la fabrication du râtelier est améliorée et ne comporte aucune opération d'assemblage des plaques en matériau neutrophage préjudiciable à leur tenue mécanique et à leur résistance à la corrosion.

Toutefois, la technique de fabrication du râtelier de stockage décrit dans le document FR-A-2 680 909 reste relativement délicate. En effet, la mise en place progressive des plaques en matériau neutrophage lors du soudage des tubes est malaisée.

De plus, l'épaisseur de la lame d'eau qui sépare deux assemblages combustibles reçus dans des cavités voisines est très difficile à maîtriser. Cela conduit à donner à cette épaisseur une valeur accrue, pour éviter tout risque de criticité.

### Exposé de l'invention

L'invention a précisément pour objet un râtelier de stockage d'assemblages de combustible nucléaire, présentant les mêmes avantages que le râtelier décrit dans le document FR-A-2 680 909, tout en autorisant une fabrication plus aisée et en garantissant la présence d'une lame d'eau d'épaisseur minimale entre les assemblages combustibles voisins.

Conformément à l'invention, ce résultat est obtenu au moyen d'un râtelier de stockage d'assemblages de combustible nucléaire comprenant :
- une structure rigide, définissant des espaces libres, de section sensiblement carrée ; et
- des ensembles neutrophages de section sensiblement carrée, reçus dans au moins certains des espaces libres, chaque ensemble étant formé de plaques planes en matériau neutrophage, caractérisé en ce fait que les ensembles neutrophages sont formés de plaques planes encerclées par au moins deux systèmes de maintien.

Un tel râtelier de stockage est fabriqué en réalisant séparément la structure rigide et les ensembles neutrophages (sans recourir à des opérations telles que le pliage, le soudage ou le rivetage), puis en introduisant ces ensembles neutrophages dans tout ou partie des espaces libres formés dans la structure rigide. Grâce à cet agencement, la fabrication du râtelier est facilitée.

La présence des systèmes de maintien entre les plaques en matériau neutrophage et la structure rigide permet en outre d'obtenir une lame d'eau d'épaisseur constante. On est ainsi certain d'obtenir l'épaisseur minimale requise pour éviter tout risque de criticité.

Par ailleurs, le caractère unitaire des ensembles neutrophages permet d'assurer dans tous les cas un maintien efficace des plaques en matériau neutrophage, quelles que soient les tolérances de fabrication de la structure rigide.

Les systèmes de maintien peuvent notamment être des cadres rigides encerclant les plaques planes à au moins deux niveaux différents.

Dans ce cas, les cadres rigides peuvent être immobilisés sur les plaques planes en matériau neutrophage, selon un axe ou une direction longitudinale des ensembles neutrophages, grâce à des encoches pratiquées dans les plaques.

Chaque cadre rigide peut alors être soit formé d'au moins deux parties élémentaires, reliées entre elles par des moyens d'assemblage tels que des soudures, soit formé d'un seul bloc. L'immobilisation des cadres sur les plaques est alors réalisée, respectivement, au moyen de parties en saillies ou d'organes de verrouillage qui pénètrent dans les encoches.

Les cadres rigides peuvent aussi être immobilisés selon une direction longitudinale des ensembles neutrophages par des moyens de liaison interposés entre ces cadres.

Dans ce cas, la circulation de l'eau de refroidissement est obtenue par des ouvertures pratiquées dans le cadre rigide.

Dans une autre forme de réalisation de l'invention, qui permet de diminuer l'épaisseur de la lame d'eau, notamment lorsque les assemblages combustibles à stocker sont usés et donc moins réactifs, chaque système de maintien comprend quatre pièces d'angle et un organe de bridage, tel qu'une sangle ou un lien métallique, encerclant ces pièces.

Habituellement, un assemblage de combustible nucléaire comprend un faisceau de crayons combustibles, dont l'espacement régulier est assuré par des grilles réparties sur toute la hauteur de l'assemblage. Les crayons combustibles contiennent des pastilles de matière fissile localisées dans leur partie centrale et matérialisant une partie centrale active de l'assemblage.

Dans ces conditions, les systèmes de maintien sont placés de préférence sensiblement au niveau des grilles des assemblages lorsque ces derniers sont reçus dans le râtelier.

Par ailleurs, les ensembles neutrophages sont avantageusement placés uniquement au niveau de la partie centrale active des assemblages lorsque ces derniers sont reçus dans le râtelier. Cette caractéristique permet de limiter le coût du râtelier.

Afin de faciliter l'introduction des assemblages dans les cavités définies à l'intérieur des ensembles neutrophages, un entonnoir peut alors être placé dans chacun des espaces libres, au-dessus des ensembles neutrophages.

Dans une forme de réalisation de l'invention, chacun des ensembles neutrophages comprend quatre plaques planes présentant des bords crénelés complémentaires, emboîtés les uns dans les autres, selon un axe ou une direction longitudinale des ensembles neutrophages.

Dans une forme de réalisation préférentielle, la structure rigide comprend des tubes de section sensiblement carrée, assemblés les uns aux autres en quinconce par des moyens de liaison.

En outre, selon un agencement connu en lui-même, les espaces libres qui sont formés à la périphérie du râtelier sont fermés vers l'extérieur de celui-ci par des tôles soudées sur les faces extérieures des tubes.

### Brève description des dessins

On décrira à présent, à titre d'exemples non limitatifs, différentes formes de réalisation de l'invention, en se référant aux dessins annexés, dans lesquels :
- la figure 1 est une vue en perspective, avec arrachement partiel, qui représente une partie d'un râtelier de stockage conforme à l'invention ;
- la figure 2 est une vue en perspective illustrant l'un des ensembles neutrophages qui équipe le râtelier de la figure 1, avant le montage de l'un des cadres rigides ;
- la figure 3 est une vue en détail qui illustre le verrouillage axial d'un cadre rigide sur les plaques en matériau neutrophage ;
- la figure 4 est une vue en perspective qui représente une variante de réalisation du cadre rigide ;
- la figure 5 illustre une autre forme de réalisation d'un système de maintien des plaques en matériau neutrophage ;
- la figure 6 est une vue en coupe longitudinale qui représente le montage d'un entonnoir au-dessus d'un ensemble neutrophage ;
- la figure 7 est une vue en coupe comparable à la figure 6, qui illustre une variante de réalisation ; et
- la figure 8 est une vue en perspective qui illustre une variante de réalisation du verrouillage axial des cadres rigides.

### Description de plusieurs formes de réalisation

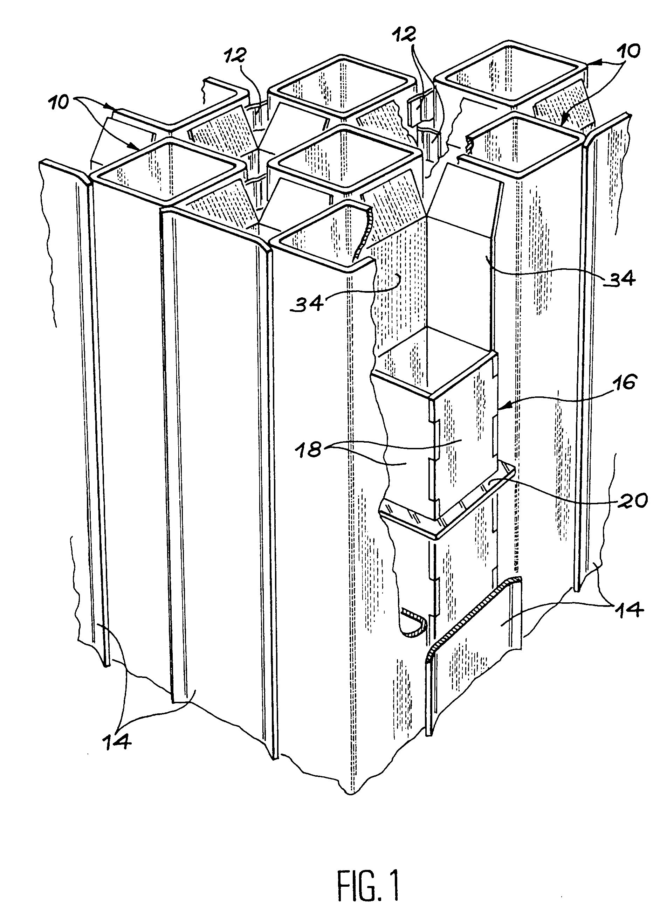

On a représenté sur la figure 1 une partie d'un râtelier de stockage d'assemblages de combustible nucléaire conforme à l'invention. Plus précisément, cette partie concerne l'un des angles supérieurs du râtelier, qui présente dans son ensemble une forme parallélépipédique.

Le râtelier de stockage selon l'invention comprend une structure rigide, délimitant des espaces libres ou cavités, de section sensiblement carrée, orientés sensiblement verticalement.

Dans la forme de réalisation représentée, cette structure rigide est formée par l'assemblage en quinconce d'un certain nombre de tubes 10, tous identiques, présentant une section uniforme sensiblement carrée. Chacun des tubes 10 définit intérieurement une cavité ouverte à ses extrémités, de section sensiblement carrée, dont les dimensions lui permettent de recevoir directement un assemblage de combustible nucléaire.

Les tubes 10 sont assemblés les uns aux autres selon un agencement en quinconce, avec leurs axes longitudinaux prévus pour être disposés verticalement. L'assemblage des tubes 10 peut être réalisé par des moyens de liaison quelconques, permettant d'obtenir une structure rigide, présentant la résistance mécanique requise pour assurer l'intégrité du râtelier, notamment en cas de séisme.

Dans la forme de réalisation illustrée à titre d'exemple sur la figure 1, les moyens de liaison par lesquels les tubes 10 sont assemblés comprennent des pattes 12, à section en forme de S aplati, qui sont soudées sur les faces extérieures sensiblement alignées des tubes 10 voisins, à différents niveaux sur toute la hauteur des tubes.

Il est à noter que l'assemblage des tubes 10 à l'aide des pattes 12 peut être réalisé aisément, de proche en proche, en soudant les pattes 12 sur les faces extérieures des tubes 10 encore accessibles.

Les espaces libres formés entre les tubes 10, présentent une section sensiblement carrée, de dimensions supérieures à celles de la section des cavités définies à l'intérieur des tubes, pour une raison qui apparaîtra par la suite.

Afin de fermer les espaces libres formés entre les tubes 10, à la périphérie du râtelier de stockage, des tôles 14 sont soudées sur les faces extérieures des tubes 10 délimitant ces espaces libres, vers l'extérieur du râtelier.

Les tubes 10, les tôles 14 et les pattes 12 sont réalisés de préférence en acier inoxydable.

Le râtelier de stockage conforme à l'invention comprend de plus des ensembles neutrophages 16, prévus pour être reçus dans tout ou partie des espaces libres et des cavités délimités par la structure rigide.

Dans la forme de réalisation représentée, les ensembles neutrophages 16 sont seulement reçus dans les espaces libres formés entre les tubes 10. Plus précisément, un ensemble neutrophage 16 est placé dans chacun de ces espaces libres.

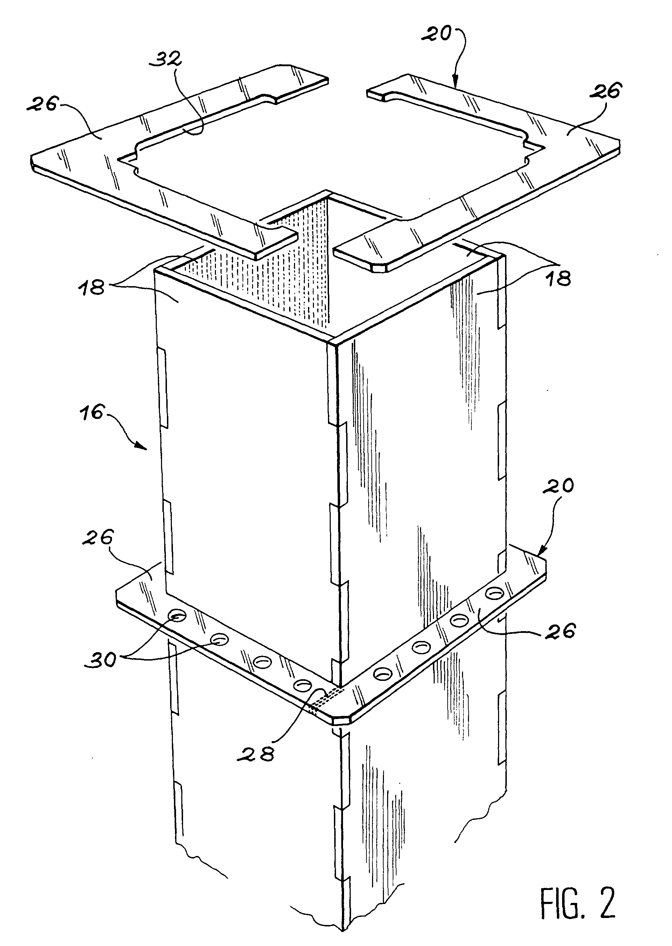

Comme l'illustre notamment la figure 2, chaque ensemble neutrophage 16 est formé par l'assemblage de quatre plaques planes 18 en matériau neutrophage et d'au moins deux systèmes de maintien 20 encerclant ces plaques. Les systèmes de maintien 20 peuvent notamment être réalisés en acier inoxydable.

Les plaques planes 18 sont de préférence toutes identiques et elles sont maintenues assemblées par les systèmes de maintien 20 sans aucune opération d'assemblage du type pliage, soudage, rivetage, etc. du matériau neutrophage. L'assemblage est tel que les quatre plaques planes 18 d'un même ensemble neutrophage 16 délimitent intérieurement une cavité de section carrée uniforme, dont l'axe longitudinal est orienté verticalement lorsque les ensembles neutrophages 16 sont placés dans les espaces libres séparant les tubes 10. Plus précisément, les ensembles neutrophages 16 sont tous identiques et chacun d'entre eux délimite intérieurement une cavité ouverte à ses extrémités et dont la section sensiblement carrée lui permet de recevoir un assemblage de combustible nucléaire.

Dans la forme de réalisation illustrée sur les figures, les bords verticaux des plaques planes 18, qui s'étendent selon la direction longitudinale de chacun des ensembles neutrophages 16, sont crénelés et présentent des formes complémentaires, de façon à pouvoir être emboîtés les uns dans les autres pour former un carré en section horizontale. Cet agencement permet d'immobiliser les plaques 18 les unes par rapport aux autres dans la direction longitudinale de chacun des ensembles neutrophages 16.

Dans la forme de réalisation illustrée sur les figures 1 à 3, chacun des systèmes de maintien se présente sous la forme d'un cadre rigide 20, en acier inoxydable, et a en vue de dessus la forme d'un carré évidé, dont les dimensions extérieures lui permettent de pénétrer dans les espaces libres séparant les tubes 10 et dont les dimensions intérieures coïncident avec les dimensions du carré formé en section horizontale par les quatre plaques 18 assemblées. Ce dimensionnement permet aux cadres 20 de maintenir assemblées les plaques 18, tout en autorisant l'introduction des ensembles neutrophages 16 dans les espaces libres prévus entre les tubes 10.

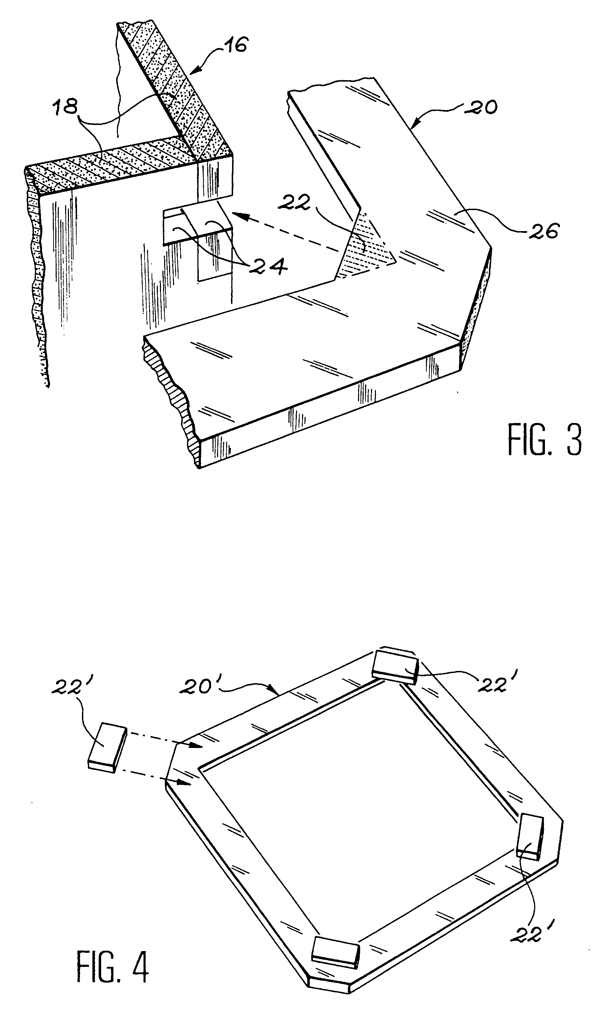

Comme l'illustre plus précisément la figure 3, chaque cadre 20 comporte, sur son pourtour intérieur, une ou plusieurs parties en saillie 22, qui pénètrent dans des encoches 24 pratiquées dans les plaques 18. Plus précisément, une partie en saillie 22 peut notamment être prévue dans un ou plusieurs des angles du cadre rigide 20. Les encoches 24 sont alors formés sur les bords crénelés des plaques 18, qui s'étendent parallèlement à l'axe longitudinal de l'ensemble neutrophage 16 correspondant.

Pour permettre le montage des cadres de maintien 20, malgré la présence des parties en saillie 22, chaque cadre est alors formé d'au moins deux parties élémentaires 26 (figure 2), reliées entre elles lors de l'assemblage des ensembles neutrophages 16, de façon à donner à chacun d'entre eux un caractère unitaire.

De façon plus précise, les parties élémentaires 26 de chacun des cadres rigides 20 sont reliées entre elles par des moyens d'assemblage tels que des soudures 28. Des organes mécaniques tels que des boulons, des goupilles, etc. peuvent aussi être utilisés si les deux parties élémentaires du cadre sont situées dans deux plans décalés, de façon à se recouvrir partiellement.

Dans la forme de réalisation illustrée sur la figure 2, les parties élémentaires 26 de chaque cadre rigide 20 sont identiques, situées dans un même plan et présentent en vue de dessus la forme d'une équerre. Les soudures 28 qui relient alors bout à bout les deux parties élémentaires 26 de chaque cadre 20 sont placées, par exemple, sensiblement dans le prolongement des faces extérieures des deux plaques 18 parallèles de l'ensemble neutrophage 16 correspondant.

Dans une variante de réalisation illustrée sur la figure 4, le cadre de maintien 20' est réalisé en une seule pièce, d'un seul tenant. Le maintien en position du cadre 20' autour des plaques 18 en matériau neutrophage, selon l'axe longitudinal de l'ensemble neutrophage 16, est alors assuré par des organes de verrouillage 22'. Ces organes de verrouillages 22' sont mis en place dans des encoches formées dans les plaques 18 (telles que les encoches 24 sur la figure 3), séparément de la mise en place du cadre 20' autour des plaques. Des moyens d'assemblage (non représentés) tels que des soudures, des boulons, etc. permettent ensuite d'immobiliser le cadre 20' sur les organes de verrouillage 22'.

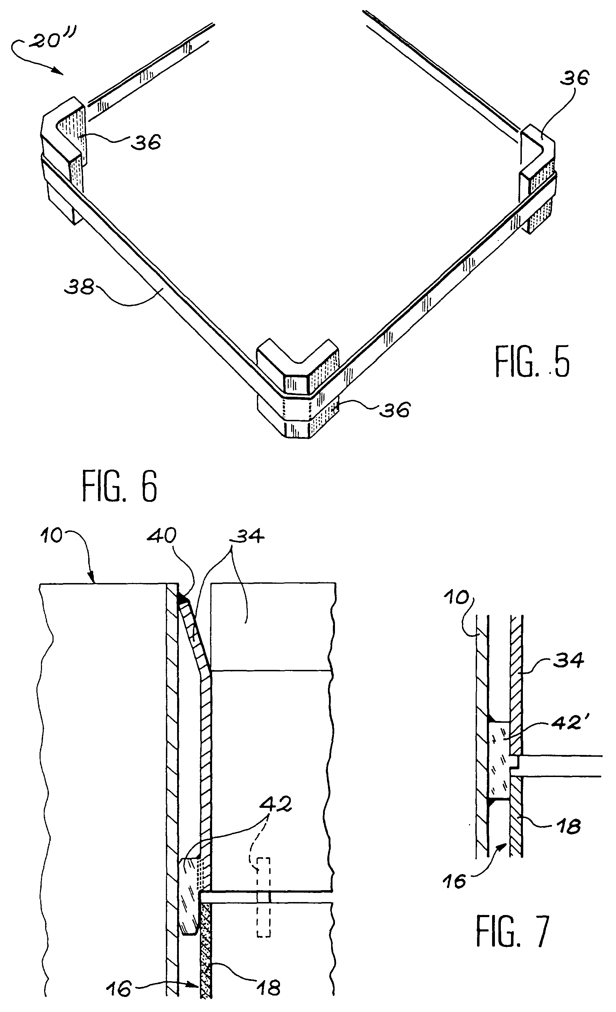

Dans une autre forme de réalisation illustrée sur la figure 5, les systèmes de maintien 20" sont formés par quatre pièces d'angle 36, en forme de cornières, et par un organe de bridage 38, tel qu'une sangle ou un lien métallique. Chaque pièce d'angle 36 est placée à un coin du carré formé en section horizontale par les quatre plaques 18 réunies. L'organe de bridage 38 encercle les pièces d'angle 36, de façon à les presser contre les plaques 18. Le verrouillage peut être assuré par tout moyen (boucle sertie, soudure de l'organe 38 sur les pièces d'angle, etc.). Le maintien en position du système de maintien 20" ainsi réalisé, selon la direction longitudinale de l'ensemble neutrophage 16, peut être assuré par la tension de l'organe de bridage 38 ou par la coopération de parties en saillie des pièces d'angle 36 avec des encoches des plaques 18, comme illustré sur la figure 3.

Grâce aux différents agencements qui viennent d'être décrits, les ensembles neutrophages 16 peuvent être fabriqués séparément et introduits dans les espaces libres formés entre les tubes 10 du râtelier de stockage, lorsque l'assemblage de ces tubes à l'aide des pattes 12 ou de tout autre moyen de liaison équivalent est terminé. Le temps et le coût de fabrication du râtelier s'en trouvent diminués.

Lorsque les ensembles neutrophages 16 sont placés dans les espaces libres séparant les tubes 10, les systèmes de maintien 20, 20' ou 20" forment des entretoises qui ménagent des passages d'épaisseur contrôlée entre les surfaces extérieures des tubes 10 et les surfaces extérieures des plaques 18. Lorsque le râtelier est en exploitation, ces passages sont remplis d'eau de refroidissement. Dans les formes de réalisation des figures 1 à 4, l'épaisseur de ces passages peut être comprise entre quelques millimètres et plusieurs dizaines de millimètres. La forme de réalisation de la figure 5 permet d'obtenir des épaisseurs encore plus faibles, ce qui peut convenir pour du stockage de combustible usagé.

Pour faciliter la circulation de l'eau de refroidissement dans les passages formés entre les tubes 10 et les plaques 18 dans les formes de réalisation des figures 1 à 4, les cadres rigides 20 comportent des ouvertures qui peuvent présenter différentes formes, comme on l'a illustré à titre d'exemple dans le bas et dans le haut de la figure 2. Ainsi, le cadre 20 représenté dans le bas de la figure 2 comprend des ouvertures constituées par des trous circulaires 30, traversant le cadre sur toute sa périphérie. Dans le cas du cadre 20 illustré dans le haut de la figure 2, les ouvertures sont constituées par des entailles 32 usinées dans le bord intérieur de chacun des cadres. Les ouvertures pratiquées dans les cadres 20 peuvent prendre toute autre forme, sans sortir du cadre de l'invention.

Comme on l'a déjà noté, chacun des ensembles neutrophages 16 comprend au moins deux systèmes de maintien 20, 20' ou 20" décalés selon son axe longitudinal. Dans une forme de réalisation préférentielle, le nombre des systèmes de maintien 20, 20' ou 20" est égal au nombre des grilles qui équipent les assemblages de combustible nucléaire susceptibles d'être reçus dans le râtelier. Dans le cas le plus fréquent où chaque assemblage comprend sept grilles, les ensembles neutrophages 16 comportent alors sept systèmes de maintien 20.

De plus, les systèmes de maintien 20 sont de préférence implantés à des niveaux qui correspondent à ceux des grilles contenues dans les assemblages de combustible nucléaire, lorsque ces assemblages sont placés dans le râtelier. Cette caractéristique permet d'éviter que les plaques 18 en matériau neutrophage ne subissent des contraintes lorsqu'un assemblage est placé dans la cavité formée à l'intérieur de l'ensemble neutrophage.

Comme on l'a illustré sur la figure 1, la hauteur des ensembles neutrophages 16 est, de préférence, inférieure à celle des tubes 10. Plus précisément, la hauteur des ensembles neutrophages 16 est avantageusement limitée à la hauteur de la partie centrale active des assemblages de combustible nucléaire susceptibles d'être reçus dans le râtelier. Les extrémités haute et basse de chacun des ensembles neutrophages 16 sont donc situées respectivement en dessous et au-dessus des extrémités hautes et basses des tubes 10. Cet agencement permet de réduire le coût du râtelier.

Pour maintenir les ensembles neutrophages 16 au niveau désiré, des butées (non représentées) peuvent être soudées sur les faces extérieures des tubes 10, lors de leur assemblage. Une embase (non représentée) peut aussi être placée dans le bas de chacun des espaces libres formés entre les tubes 10.

Dans ces conditions, on place avantageusement un entonnoir 34 (figures 1 et 6) dans chacun des espaces libres, au-dessus de l'ensemble neutrophage 16 placé dans cet espace. Les entonnoirs 34 assurent un centrage et un guidage automatique des assemblages de combustible nucléaire, lorsque ces derniers sont introduits dans les cavités formées à l'intérieur des ensembles neutrophages 16. Chaque entonnoir 34 est réalisé par exemple en tôle d'acier inoxydable et présente, sur la majeure partie de sa hauteur, une section carrée sensiblement identique à la section des cavités formées dans les ensembles neutrophages 16. Toutefois, chaque entonnoir 34 s'évase progressivement dans sa partie haute, dont les bords supérieurs sont soudés en 40 (figure 6) contre les surfaces extérieures des tubes 10 adjacents. Cet agencement permet de ménager un jeu fonctionnel permettant la dilatation, entre le bord inférieur de l'entonnoir 34 et les bords supérieurs des plaques 18 de l'ensemble neutrophage 16. Des cales 42, préalablement soudées autour de l'extrémité inférieure de l'entonnoir 34, assurent le centrage de cette extrémité, et de l'extrémité haute des plaques 18, entre les tubes 10.

D'une manière alternative le centrage de l'extrémité inférieure de l'entonnoir 34 et de l'extrémité supérieure des plaques 18 peut être assuré par des cales étagées 42 soudées au préalable sur les tubes 10 (figure 7).

Dans le râtelier de stockage conforme à l'invention, il est à noter que les plaques 18 des ensembles neutrophages 16 peuvent comporter en variante des bords verticaux droits, c'est-à-dire non crénelés. L'immobilisation des plaques 18 les unes par rapport aux autres dans le sens longitudinal de chaque ensemble neutrophage 16 est alors assurée par les systèmes de maintien 20 qui entourent ces plaques. A cet effet, chaque système de maintien comporte alors avantageusement au moins quatre parties en saillie 22, reçues dans des encoches 24 formées dans chacune des plaques 18.

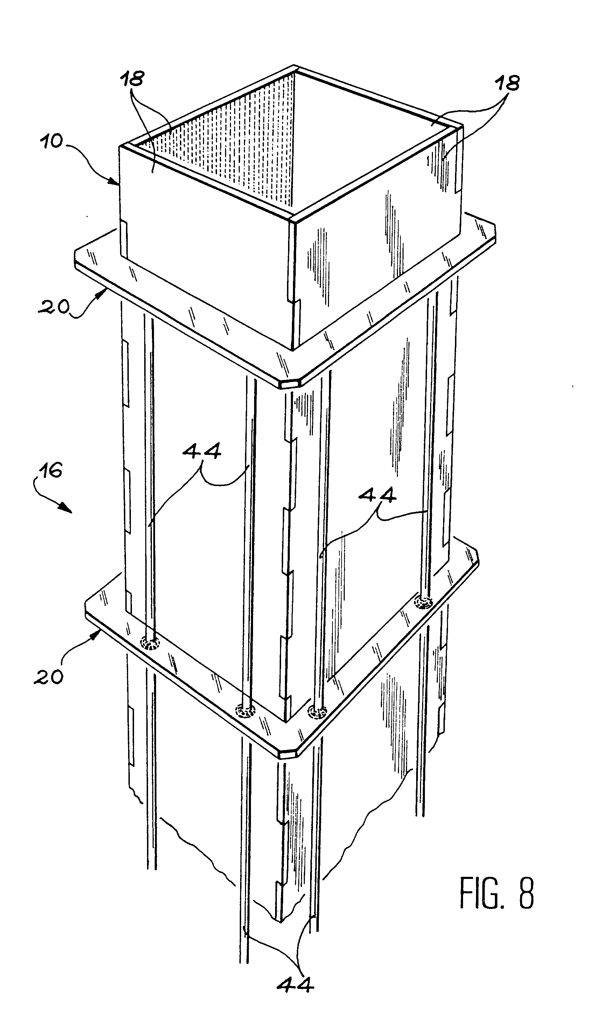

Comme l'illustre schématiquement la figure 8, l'immobilisation des cadres rigides 20 selon la direction longitudinale des ensembles neutrophages 16 peut aussi être obtenue en reliant les cadres 20 les uns aux autres par des moyens de liaison rigides tels que des entretoises 44. Ces entretoises 44, orientées selon la direction longitudinale des ensembles neutrophages 16, sont fixées aux cadres rigides 20, par exemple par des soudures. Des butées (non représentées) peuvent alors être soudées sur les faces extérieures des tubes 10, lors de leur assemblage, pour maintenir en translation l'un des cadres rigides 20.

La conception du râtelier conforme à l'invention permet d'effectuer l'assemblage préalable des ensembles neutrophages, avant leur montage dans les espaces libres formés entre les tubes 10 du râtelier. Chaque ensemble neutrophage forme ainsi un ensemble compact dépourvu de toute liaison avec la structure en acier inoxydable constituant le reste du râtelier. Il en découle un gain de temps lors du montage du râtelier, une amélioration de la qualité de fabrication et une standardisation des différents éléments.

L'agencement décrit permet aussi une diminution du poids et du coût du râtelier, du fait que seule une cavité sur deux est formée par un tube en acier inoxydable.

Comme on l'a déjà noté, l'assemblage des tubes 10 entre eux peut également être effectué sans difficulté, notamment à l'aide des pattes 12.

La conception du râtelier de stockage selon l'invention permet aussi d'éviter tout risque de déboîtement des plaques en matériau neutrophage, quelles que soient les tolérances de montage des tubes 10.

Il est à noter, par ailleurs, qu'une disposition judicieuse des systèmes de maintien 20 permet d'éviter l'application de contraintes sur les plaques 18 en matériau neutrophage.

En outre, on observera que la structure rigide dans laquelle sont reçus les ensembles neutrophages peut être réalisée de manière différente. Les ensembles neutrophages peuvent être répartis dans la structure rigide selon une disposition quelconque, en occupant une partie des espaces libres ou la totalité d'entre eux. Il est à noter que, dans le râtelier de stockage décrit précédemment à titre d'exemple, les tubes 10 peuvent être munis intérieurement d'ensembles neutrophages équipés ou non de cadres.

## Revendications

1. Râtelier de stockage d'assemblages de combustible nucléaire comprenant :
- une structure rigide définissant des espaces libres, de section sensiblement carrée ; et
- des ensembles neutrophages (16) de section sensiblement carrée, reçus dans au moins certains des espaces libres, chaque ensemble étant formé de plaques planes (18) en matériau neutrophage, **caractérisé en ce que** les ensembles neutrophages sont formés de plaques planes encerclées par au moins deux systèmes de maintien (20, 20', 20").

2. Râtelier selon la revendication 1, dans lequel les systèmes de maintien sont des cadres rigides (20) encerclant les plaques planes à au moins deux niveaux différents.

3. Râtelier selon la revendication 2, dans lequel les cadres rigides (20) sont immobilisés sur les plaques planes (18), selon une direction longitudinale des ensembles neutrophages (16), par des encoches (24) pratiquées dans les plaques planes (18).

4. Râtelier selon la revendication 3, dans lequel chaque cadre rigide (20) est formé d'au moins deux parties élémentaires (26), reliées entre elles par des moyens d'assemblage (28) et comportant des parties en saillie (22) qui pénètrent dans les encoches (24).

5. Râtelier selon la revendication 3, dans lequel chaque cadre rigide (20') est formé d'un seul bloc et coopère avec les encoches (24) par l'intermédiaire d'organes de verrouillage (22').

6. Râtelier selon la revendication 2, dans lequel les cadres rigides (20) sont immobilisés selon une direction longitudinale des ensembles neutrophages (16) par des moyens de liaison (44) interposés entre ces cadres.

7. Râtelier selon l'une quelconque des revendications 2 à 6, dans lequel chaque cadre rigide (20,20') comporte des ouvertures (30,32) de circulation d'eau de refroidissement.

8. Râtelier selon la revendication 1, dans lequel chaque système de maintien (20") comprend quatre pièces d'angle (36) et un organe de bridage (38) encerclant ces pièces.

9. Râtelier selon l'une quelconque des revendications précédentes, dans lequel les assemblages de combustible nucléaire prévus pour être reçus dans le râtelier comportant plusieurs grilles, les systèmes de maintien (20) sont placés sensiblement au niveau des grilles des assemblages, lorsque ces derniers sont reçus dans le râtelier.

10. Râtelier selon l'une quelconque des revendications précédentes, dans lequel les assemblages de combustible nucléaire prévus pour être reçus dans le râtelier comportant une partie centrale active, de hauteur limitée, les ensembles neutrophages (16) sont placés uniquement au niveau de la partie centrale active des assemblages, lorsque ces derniers sont reçus dans le râtelier.

11. Râtelier selon la revendication 10, dans lequel un entonnoir (34) est placé dans chacun des espaces libres, au-dessus de l'ensemble neutrophage (16).

12. Râtelier selon l'une quelconque des revendications précédentes, dans lequel chaque ensemble neutrophage (16) comprend quatre plaques planes (18) présentant des bords crénelés complémentaires, emboîtés les uns dans les autres, selon une direction longitudinale des ensembles neutrophages.

13. Râtelier selon l'une quelconque des revendications précédentes, dans lequel la structure rigide comprend des tubes (10) de section sensiblement carrée, assemblés les uns aux autres en quinconce par des moyens de liaison (12).

14. Râtelier selon la revendication 13, dans lequel les moyens de liaison comprennent des pattes (12) soudées sur les faces extérieures des tubes (10).

15. Râtelier selon l'une quelconque des revendications 13 et 14, dans lequel les espaces libres formés à la périphérie du râtelier sont fermés par des tôles (14) soudées sur les faces extérieures des tubes (10).

16. Ratelier selon l'une quelconque des revendications 13 à 15, dans lequel les tubes (10) sont équipés intérieurement d'ensembles neutrophages comportant ou non des cadres.

## Claims

1. Rack for storing nuclear fuel assemblies comprising a rigid structure defining free spaces having a substantially square cross-section and neutron-absorbing members (16) having a substantially square cross-section and received in at least some of the free spaces, each member being formed from flat, neutron-absorbing material plates (18), **characterized in that** the neutron-absorbing members are formed by flat plates encircled by at least two holding systems (20, 20', 20").

2. Rack according to claim 1, wherein the holding systems are rigid frames (20) encircling the flat plates at at least two different levels.

3. Rack according to claim 2, wherein the rigid frames (20) are fastened to the flat plates (18) in a longitudinal direction of the neutron-absorbing members (16) by notches (24) made in the flat plates (18).

4. Rack according to claim 3, wherein each rigid frame (20) is formed by at least two elementary parts (26) interconnected by assembly means (28) and having projecting parts (22) penetrating the notches (24).

5. Rack according to claim 3, wherein each rigid frame (20') is formed by a single block and cooperates with the notches (24) by means of locking members (22').

6. Rack according to claim 2, wherein the rigid frames (20) are fastened in accordance with a longitudinal direction of the neutron-absorbing members (16) by connecting means (44) interposed between said frames.

7. Rack according to any one of the claims 2 to 6, wherein each rigid frame (20, 20') has cooling air circulation openings (30, 32).

8. Rack according to claim 1, wherein each holding system (20") comprises four angle pieces (36) and a clamping member (38) encircling said pieces.

9. Rack according to any one of the preceding claims, wherein the nuclear fuel assemblies received in the rack have several grids, the holding systems (20) being placed substantially level with the grids of the assemblies when the latter are received in the rack.

10. Rack according to any one of the preceding claims, wherein the nuclear fuel assemblies received in the rack have a central, active part of limited height and the neutron-absorbing members (26) are positioned solely level with the active, central part of the assemblies, when the latter are received in the rack.

11. Rack according to claim 10, wherein a funnel (34) is placed in each of the free spaces above the neutron-absorbing member (16).

12. Rack according to any one of the preceding claims, wherein each neutron-absorbing member (16) comprises four flat plates (18) having complimentary indented edges and which are fitted into one another in a longitudinal direction of the neutron-absorbing members.

13. Rack according to any one of the preceding claims, wherein the rigid structure comprises tubes (10) having a substantially square cross-section and which are assembled with one another in staggered manner by connecting means (12).

14. Rack according to claim 13, wherein the connecting means comprise tabs (12) welded to the outer faces of the tubes (10).

15. Rack according to either of the claims 13 and 14, wherein the free spaces formed on the periphery of the rack are closed by sheets (14) welded to the outer faces of the tubes (10).

16. Rack according to any one of the claims 13 to 15, wherein the tubes (10) are internally equipped with neutron-absorbing members which may or may not have frames.

## Patentansprüche

1. Lagergestell für Kernreaktorbrennstabbündel, umfassend:
- eine freie Räume von im Wesentlichen quadratischem Querschnitt definierende, steife Struktur; und
- Neutronenabsorberelemente (16) von im Wesentlichen quadratischem Querschnitt, angeordnet in wenigstens einigen der freien Räume, wobei jedes Element durch plane Platten (18) aus Neutronenabsorbermaterial gebildet wird,
**dadurch gekennzeichnet**,
dass die Neutronenabsorberelemente durch plane Platten gebildet werden, die durch wenigstens zwei Haltesysteme (20, 20', 20") eingeschlossen sind.

2. Lagergestell nach Anspruch 1, bei dem die Haltesysteme steife Rahmen (20) sind, die die planen Platten in wenigstens zwei verschiedenen Ebenen einschließen.

3. Lagergestell nach Anspruch 2, bei dem die steifen Rahmen (20) entsprechend einer Längsrichtung der Neutronenabsorberelemente (16) mittels in den planen Platten (18) vorgesehener Kerben (24) in diesen planen Platten (18) festgehalten werden.

4. Lagergestell nach Anspruch 3, bei dem jeder steife Rahmen (20) durch wenigstens zwei Elementarteile (26) gebildet wird, die durch Zusammenbaueinrichtungen (28) miteinander verbunden sind und vorstehende Teile (22) umfassen, die in die Kerben (24) eindringen.

5. Lagergestell nach Anspruch 3, bei dem jeder steife Rahmen (20') durch einen einzigen Block gebildet wird und mit den Kerben (24) durch Verriegelungsorgane (22') zusammenwirkt.

6. Lagergestell nach Anspruch 2, bei dem die steifen Rahmen (20) in einer Längsrichtung der Neutronenabsorberelemente (16) durch zwischen diesen Rahmen eingefügten Verbindungseinrichtungen (44) festgehalten werden.

7. Lagergestell nach einem der Ansprüche 2 bis 6, bei dem jeder steife Rahmen (20,20') Öffnungen (30,32) für die Zirkulation von Kühlwasser umfasst.

8. Lagergestell nach Anspruch 1, bei dem jedes Haltesystem (20") vier Winkelstücke (36) und einen Gurt (38) umfasst, der diese Winkelstücke umschlingt.

9. Lagergestell nach einem der vorangehenden Ansprüche, bei dem die zur Aufnahme in dem Lagergestell vorgesehenen Kernreaktorbrennstabbündel mehrere Gitter umfassen, wobei die Haltesysteme (20) sich im Wesentlichen in Höhe der Gitter der Elemente befinden, wenn diese letzteren von dem Gestell aufgenommen worden sind.

10. Lagergestell nach einem der vorangehenden Ansprüche, bei dem die zur Aufnahme in dem Lagergestell vorgesehenen Kernreaktorbrennstabbündel einen aktiven zentralen Teil von begrenzter Höhe umfassen, wobei die Neutronenabsorberelemente (16) sich nur in Höhe des aktiven zentralen Teils der Elemente befinden, wenn diese letzteren von dem Gestell aufgenommen worden sind.

11. Lagergestell nach Anspruch 10, bei dem in jedem der freien Räume über dem Neutronenabsorberelement ein Trichter (34) angeordnet ist.

12. Lagergestell nach einem der vorangehenden Ansprüche, bei dem jedes Neutronenabsorberelement (16) vier plane Platten (18) umfasst, die komplementär ausgezackte Ränder aufweisen, die entsprechend einer Längsrichtung der Neutronenabsorberelemente zusammengefügt sind.

13. Lagergestell nach einem der vorangehenden Ansprüche, bei dem die steife Struktur Rohre (10) von im Wesentlichen quadratischem Querschnitt umfasst, die mittels Verbindungseinrichtungen (12) entsprechend einer Quincunxanordnung zusammengebaut sind.

14. Lagergestell nach Anspruch 13, bei dem die Verbindungseinrichtungen auf die Außenseite der Rohre (10) geschweißte Befestigungseisen (12) umfassen.

15. Lagergestell nach einem der Ansprüche 13 und 14, bei dem die am Rand des Gestells gebildeten freien Räume durch auf die Außenseiten der Rohre (10) geschweißte Bleche (14) verschlossen sind.

16. Lagergestelle nach einem der Ansprüche 13 bis 15, bei dem die Rohre (10) innen mit Neutronenabsorberelementen ausgerüstet sind, die Rahmen oder keine Rahmen umfassen.
